# EUROPÄISCHE PATENTANMELDUNG

(11) **EP 1 217 846 A2**
(43) Veröffentlichungstag der Anmeldung: **26.06.2002**
(21) Anmeldenummer: 01128880.0
(22) Anmeldetag: 05.12.2001
(51) Int. Cl.: H04N 13/00

(54) **Stereoskopisches Darstellungssystem mit einem einzigen Display**

(30) Priorität: 23.12.2000 DE 10065050
(71) Anmelder: Carl Zeiss, 89518 Heidenheim (Brenz) (DE); Carl-Zeiss-Stiftung, trading as Carl Zeiss, 89518 Heidenheim (Brenz) (DE)
(72) Erfinder: Kaschke, Michael, Dr., 73447 Oberkochen (DE); Monz, Ludwin, Dr., 89081 Ulm (DE)

(57) **Zusammenfassung**

Die vorliegende Erfindung betrifft ein stereoskopisches Darstellungssystem mit einem einzigen Display (7). Auf dem Display (7) werden zeitlich sequentiell rechte und linke Teilbilder dargestellt. Für die Beobachtung sind zwei separate Teilstrahlengänge (21, 22) für die Beobachtung nur linker (21) und nur rechter Teilbilder (22) und eine Umschalteinrichtung (5, 9) vorgesehen, die bildsynchron mit der Darstellung rechter und linker Teilbilder auf dem Display (7) die dargestellten Informationen aus einem gemeinsamen Teil des Beobachtungsstrahlenganges alternierend jeweils separat in einen der zwei Teilstrahlengänge einkoppelt.

Bei einer Ausführungsform der Erfindung besteht die Umschalteinrichtung aus einem Polarisationsschalter (5) und einem Polarisationsstrahlteiler (9). Der Polarisationsschalter (5) kann dabei entweder im Beleuchtungsstrahlengang oder im gemeinsamen Teil des Beobachtungsstrahlenganges angeordnet sein.

## Beschreibung

Die vorliegende Erfindung betrifft ein stereoskopisches Darstellungssystem mit einem einzigen Display, auf dem zeitlich sequentiell rechte und linke Teilbilder darstellbar sind. Derartige stereoskopische Darstellungssysteme sind beispielsweise in der DE-C1 41 34 033 und in der WO96/04581 beschrieben. Das in der DE-C1 41 34 033 beschriebene System baut dabei auf einem herkömmlichen TV-Monitor mit einer Brownschen Röhre auf, auf dem alternierend das rechte und linke Teilbild im Halbbildverfahren dargestellt wird und ein vor dem Monitor angeordneter Polarisationsschalter bildsynchron mit der Darstellung der rechten und linken Teilbilder geschaltet wird. Durch Beobachtung der auf dem Monitor dargestellten Bilder mit Hilfe einer passiven Polarisationsbrille ergibt sich dann der stereoskopische Seheindruck.

In der WO96/04581 ist ein Projektionssystem mit einem Digital Mirror Display (DMD) beschrieben, das zur Sehprüfung, insbesondere auch zur stereoskopischen Sehprüfung eingesetzt werden soll. Zur stereoskopischen Sehprüfung soll eine schnell drehbare Filterscheibe mit Polarisationsfiltern unterschiedlicher Polarisation entweder im Beobachtungs- oder im Beleuchtungsstrahlengang des DMD angeordnet sein. Die stereoskopische Beobachtung erfolgt wiederum mit einer passiven Polarisationsbrille vor den Augen der Testperson.

Darüberhinaus sind beispielsweise in der US 5 106 179, US 5 371 556 und US 5 526 184 sogenannte Headmounted-Displayeinrichtungen beschrieben, die unmittelbar am Kopf des Beobachters getragen werden. Da bei solchen Headmounted-Displays ohnehin separate Teilstrahlengänge für das linke und rechte Auge vorgesehen sind, werden hier üblicherweise separate Displays für das rechte und linke Auge vorgesehen, von denen eins nur vom rechten Auge und das andere nur vom linken Auge beobachtet wird.

Ziel der vorliegenden Erfindung ist ein stereoskopisches Darstellungssytem, das eine einfache und kompakte Bauweise aufweist und insbesondere zum Einsatz in am Kopf getragenen Displayeinrichtungen geeignet ist.

Dieses Ziel wird durch ein stereoskopisches Darstellungssystem mit den Merkmalen der Ansprüche 1 und 10 gelöst. Vorteilhafte Ausgestaltungen der Erfindung ergeben sich aus den Merkmalen der abhängigen Ansprüche.

Das erfindungsgemäße stereoskopische Darstellungssystem weist ein einziges Display auf, auf dem zeitlich sequentiell rechte und linke Teilbilder darstellbar sind. Bei der Ausführungsform gemäß Anspruch 1 sind zwei separate Teilstrahlengänge für die Beobachtung vorgesehen, von denen der eine nur zum linken Auge des Beobachters und der andere nur zum rechten Auge des Beobachters führt und dementsprechend der eine nur zur Übertragung der linken Teilbilder und der andere zur Übertragung nur der rechten Teilbilder dient. Es ist eine Umschalteinrichtung vorgesehen, die bildsynchron mit der Darstellung der rechten und linken Teilbilder auf dem Display die auf dem Display dargestellte Information aus einem gemeinsamen Teil des Beobachtungsstrahlenganges alternierend jeweils in einen der zwei separaten Teilstrahlengänge einkoppelt.

Die Umschalteinrichtung kann einen in den Beobachtungsstrahlengang ein- und ausschaltbaren Spiegel aufweisen. Ein derartiges System hat den Vorteil, daß es ohne eine Polarisationstrennung auskommt und demzufolge hinsichtlich eines störenden Übersprechens der dargestellten Bildinformation in den falschen Teilstrahlengang sehr unkritisch ist.

Bei einem alternativen Ausführungsbeispiel ist entweder im Beleuchtungsstrahlengang oder im gemeinsamen Teil des Beobachtungsstrahlenganges ein Polarisationsschalter vorgesehen, durch den die Polarisationsrichtung des Lichtes bildsynchron geschaltet wird. Die nachfolgende Aufteilung des gemeinsamen Beobachtungsstrahlenganges in die beiden Teilstrahlengänge erfolgt dann vorzugsweise durch einen Polarisationsstrahlteiler. Alternativ zu einem Polarisationsstrahlteiler kann für die Strahlteilung auch ein gewöhnlicher teildurchlässiger Spiegel vorgesehen sein, wenn in den separaten Teilstrahlengänge Polarisationsfilter mit zueinander gekreuzten Durchlaßrichtungen vorgesehen sind.

Bei einem Einsatz der Erfindung als sogenanntes Headmounted-Display, das also am Kopf des Beobachters getragen wird, weist vorzugsweise einer der beiden Teilstrahlengänge eine Transferoptik auf, die den Weglängenunterschied zwischen dem Display und den beiden Augen des Beobachters ausgleicht.

Die Ausführungsform gemäß Anspruch 10 weist ebenfalls ein einziges Display auf, auf dem zeitlich sequentiell rechte und linke Teilbilder darstellbar sind. Das System weist weiterhin einen Beleuchtungsstrahlengang für das Display auf, durch den das Display zeitlich sequentiell mit Licht unterschiedlicher Polarisationsrichtungen beleuchtet wird. Der Beleuchtungsstrahlengang für das Display weist dabei einen Polarisationsstrahlteiler auf, durch den das von zwei Lichtquellen stammende Licht einander überlagert wird.

Dieses System hat den besonderen Vorteil, daß jeweils das gesamte im Beobachtungsstrahlengang vorhandene Licht bzw. das auf einem Projektionsschirm vorhandene Licht zu einem der beiden Augen des Beobachters gelangen kann, ohne daß eine Filterung oder Abschwächung erfolgt. Ein solches System kann sich daher durch eine besonders hohe Brillanz auszeichnen. Darüberhinaus lassen sich Probleme einer unvollständigen Auslöschung, wie diese bei schnell geschalteten Polarisationsschaltern oder im Strahlengang rotierenden Polarisationsfiltern auftreten können, vermeiden.

Nachfolgend werden Einzelheiten der Erfindung anhand der in den Figuren dargestellten Ausführungsbeispiele näher erläutert. Im einzelnen zeigen:
- Figur 1: die Prinzipskizze eines ersten Ausführungsbeispiels der Erfindung im Schnitt;
- Figur 2: eine zweite Ausführungsform der Erfindung, bei der das gesamte Darstellungssystem in eine Brillenfassung integriert ist;
- Figur 3: die Prinzipskizze einer dritten Ausführungsform der Erfindung;
- Figur 4: die Aufsicht auf eine Chopper-Scheibe bei einem Beleuchtungssystem entsprechend der Ausführungsform nach Figur 3 und
- Figuren 5a und 5b: den zeitlichen Verlauf der Lichtintensitäten in den beiden Beleuchtungsstrahlengängen beim Ausführungsbeispiel nach Figur 3.

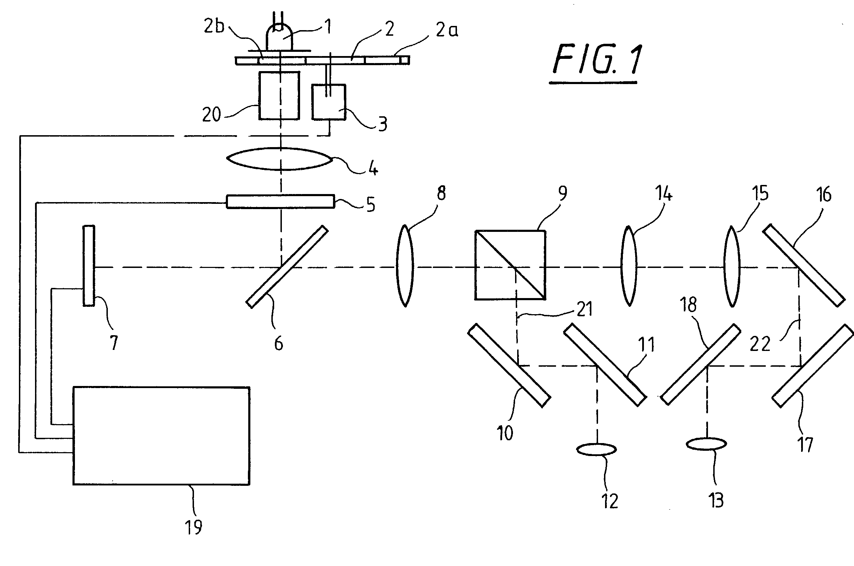

Das Ausführungsbeispiel in Figur 1 weist eine einzige Lichtquelle (1), beispielsweise eine Kaltlichtlampe oder eine weiße LED mit einem nachgeschalteten Farbfilterrad (2) auf. Das Farbfilterrad (2) weist drei verschiedene Farbfilter (2a, 2b) auf, von denen eines nur rotes Licht, das zweite nur blaues Licht und das dritte nur grünes Licht transmitrieren läßt. Die Drehbewegung des Farbfilterrades (2) wird über einen Antriebsmotor (3) angesteuert.

Dem Farbfilterrad (2) folgt in Lichtrichtung gesehen ein Strahlhomogenisierer (20) und diesem nachfolgen eine Kollimatoroptik (4), durch die das aus dem Strahlhomogenisierer (20) austretende Licht kollimiert wird. Auf die Kollimatoroptik (4) folgt ein Polarisationsschalter (5) durch den die Polarisation des transmittierten Lichtes zwischen zwei orthogonalen Polarisationsrichtungen (horizontol-vertikal, linkszirkular-rechtszirkular) geschaltet werden kann. Durch einen nachfolgenden Strahlteiler (6) wird das Licht des Beleuchtungsstrahlenganges zu einem reflektiven Display (7), beispielsweise einem DMD, gelenkt. Der Polarisationsschalter (5) kann als großflächiges Flüssigkristall-System ausgebildet sein, durch das - je nach an den Elektroden angelegter Spannung - das transmittierte Licht unterschiedlich polarisiert wird.

Eine Videokontrolleinheit (19) steuert das Display (7) und ebenfalls den Polarisationsschalter (5) und den Antriebsmotor (3) für das Farbfilterrad (2) an. Die Ansteuerung erfolgt dabei derart, daß für jedes stereoskopische Teilbild zeitlich nacheinander die gewünschte Videoinformation in den drei Grundfarben rot, grün und blau dargeboten wird. Ein gesamtes farbiges Stereobildpaar setzt sich demzufolge aus insgesamt sechs Einzelbildern zusammen. Dabei können entweder zunächst die zu einem stereoskopischen Teilbilder gehörigen drei Farbbilder zeitlich nacheinander dargeboten werden, d.h. die Umschaltfrequenz des Polarisationsschalters (5) beträgt 1/3 der Bildfrequenz des Displays (7) und der Schaltfrequenz des Farbfilterrades (2), oder es werden zeitlich nacheinander jeweils die stereoskopischen Teilbilder in der selben Farbe dargeboten. Im letzteren Falle ist die Schaltfrequenz des Polarisationsschalters (5) doppelt so hoch wie die Schaltfrequenz des Farbfilterrades (2).

Mit Hilfe des Strahlteilers (6) erfolgt eine Abtrennung des Beobachtungsstrahlenganges vom Beleuchtungsstrahlengang. Im gemeinsamen Teil des Beobachtungsstrahlenganges ist zunächst eine Abbildungsoptik (8) angeordnet, und darauffolgend ein Polarisationsstrahlteiler (9), durch den eine Aufteilung in separate Teilstrahlengänge (21, 22) für die beiden Augen des Beobachters erfolgt. In dem am Polarisationsstrahlteiler (9) abgelenkten Teilstrahlengang (21) sind zwei weitere Umlenkspiegel (10, 11) vorgesehen, durch die der abgelenkte Strahlengang zweimal um jeweils 90° umgelenkt wird. In dem am Polarisationsstrahlteiler (9) transmittierten Teilstrahlengang (22) folgt auf den Polarisationsstrahlteiler (9) zunächst eine Transferoptik (14, 15) und darauf folgend drei Umlenkspiegel (16, 17, 18), die den am Polarisationsstrahlteiler (9) transmittierten Teilstrahlengang (22) insgesamt dreimal um jeweils 90° so umlenken, daß die beiden Teilstrahlengänge (21, 22) nach Umlenkung am jeweils letzten Spiegel (11) bzw. (18) parallel zueinander verlaufen.

Die Abbildungsoptik (8) im gemeinsamen Teil des Beobachtungsstrahlenganges ist so ausgelegt, daß sie das Display (7) hinter dem letzten Umlenkspiegel (11) des für das linke Auge vorgesehenen Teilstrahlenganges (21) in der Brennebene eines linken Okulars (12) abbildet. Die Transferoptik (14, 15) in dem am Polarisationsstrahlteiler (9) transmittierten Teilstrahlengang ist so ausgelegt, daß trotz der größeren Weglänge in dem am Polarisationsstrahlteiler (9) transmittierten Teilstrahlengang (22) das Display (7) über die Optik (8) und die Transferoptik (14, 15) im gleichen Abbildungsmaßstab wie für das linke Auge in der Brennebene des rechten Okulars (13) hinter dem Umlenkspiegel (18) abgebildet wird.

Durch den Polarisationsstrahlteiler (9) im gemeinsamen Teil des Beobachtungsstrahlenganges zusammen mit dem Polarisationsschalter (5) im Beleuchtungsstrahlengang wird erreicht, daß jeweils die nur für das linke Auge vorgesehene Bildinformation in den für das linke Auge vorgesehenen Teilstrahlengang und nur die für das rechte Auge vorgesehene Bildinformation in den zum rechten Auge führenden Teilstrahlengang eingekoppelt wird. Der Polarisationsschalter (5) und der Polarisationsstrahlteiler (9) sind dazu entsprechend aufeinander abgestimmt, daß das den Polarisationsschalter (5) transmittierende Licht in jedem der beiden Schaltzustände des Polarisationsschalters (5) am Polarisationsstrahlteiler (9) vollständig reflektiert oder vollständig transmittiert wird.

Das in der Figur 1 dargestellte Ausführungsbeispiel ist insbesondere zur Einspiegelung stereoskopischer Bilder in Mikroskopen geeignet. Der Aufbau des Beobachtungsstrahlenganges entspricht dabei im wesentlichen dem Aufbau üblicher binokularer Beobachtungstuben. Insbesondere ist durch Drehung der jeweils aus zwei Umlenkspiegeln und dem zugehörigen Okular bestehenden Baueinheiten (10, 11, 12) bzw. (17, 18, 13) um die zueinander parallelen optischen Achsen (21, 22) eine Einstellung auf unterschiedliche Pupillenabstände des Beobachters möglich.

Eine gegenüber der Ausführungsform nach Figur 1 leicht abgewandelte Ausführungsform ergibt sich, indem der Polarisationsschalter (5) statt im Beleuchtungsstrahlengang im gemeinsamen Teil des Beobachtungsstrahlenganges angeordnet ist, beispielsweise zwischen der Abbildungsoptik (8) und dem Polarisationsstrahlteiler (9). Eine weitere leicht abgewandelte Ausführungsform ergibt sich, indem anstelle eines Polarisationsschalters (5) und eines Polarisationsstrahlteilers (9) am Ort des Polarisationsstrahlteilers (9) bzw. der Teilerfläche des Polarisationsstrahlteilers ein in den Strahlengang ein- und ausschaltbarer Spiegel vorgesehen wird, der bildsynchron mit der Darstellung der rechten und linken Teilbilder geschaltet wird.

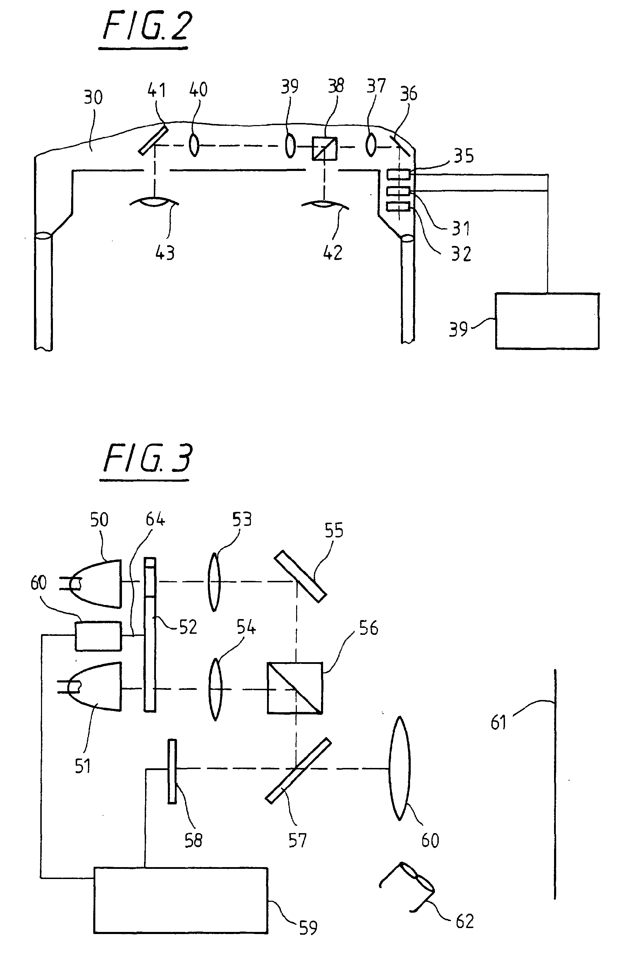

Beim Ausführungsbeispiel nach Figur 2 ist das gesamte Darstellungssystem gegenüber dem Ausführungsbeispiel nach Figur 1 deutlich miniaturisiert und, bis auf eine Ansteuereinheit (39) vollständig in eine am Kopf des Beobachters zu tragende Brillenfassung (30) integriert. Das Display (31) kann als LCOS Mikrodisplay mit einer Kantenlänge von 1cm x 1cm oder als ein anderes Silizium basierendes Flüssigkristalldisplay ausgebildet sein. Das Mikrodisplay (31) wird zeitlich nacheinander von einer miniaturisierten Beleuchtungseinrichtung (32) auf LED Basis in den drei Grundfarben rot, grün und blau ausgeleuchtet. Dem Mikrodisplay (31) nachgeschaltet im gemeinsamen Teil des Beobachtungsstrahlenganges ist ein Polarisationsschalter (35) der bildsynchron mit der Wiedergabe der rechten und linken Teilbilder geschaltet ist. Auf den Polarisationsschalter (35) folgt ein Umlenkspiegel (36), der den gemeinsamen Beobachtungsstrahlengang senkrecht zur Blickrichtung des Beobachters umlenkt. Auf den Umlenkspiegel (36) folgt im umgelenkten Teil des gemeinsamen Beobachtungsstrahlenganges eine Abbildungsoptik (37) und auf die Abbildungsoptik (37) ein Polarisationsstrahlteiler (38). Die Abbildungsoptik (37) ist dabei so ausgelegt, daß das Display (31) nach Umlenkung am Polarisationsstrahlteiler (38) auf die Retina des rechten Auges (42) abgebildet wird. In dem den Polarisationsstrahlteiler (38) transmittierenden Teilstrahlengang folgt wiederum eine Transferoptik (39, 40) und auf die Transferoptik ein Umlenkspiegel (41), der den zum linken Auge (43) führenden Teilstrahlengang in Richtung auf das Auge (43) ablenkt. Die Transferoptik (39, 40) ist so ausgelegt, daß gemeinsam mit der Abbildungsoptik (37) das Display (31) trotz des längeren Lichtweges zum linken Auge (43) auf der Retina des linken Auges (43) abgebildet wird.

Wie bei dem anhand der Figur 1 beschriebenen Ausführungsbeispiel sind auch bei diesem Ausführungsbeispiel der Polarisationsstrahlteiler (38) und der Polarisationsschalter (35) aufeinander abgestimmt, so daß die auf dem Display (31) dargestellte Bildinformation entweder nur zum rechten Auge (42) oder nur zum linken Auge (43) gelangt.

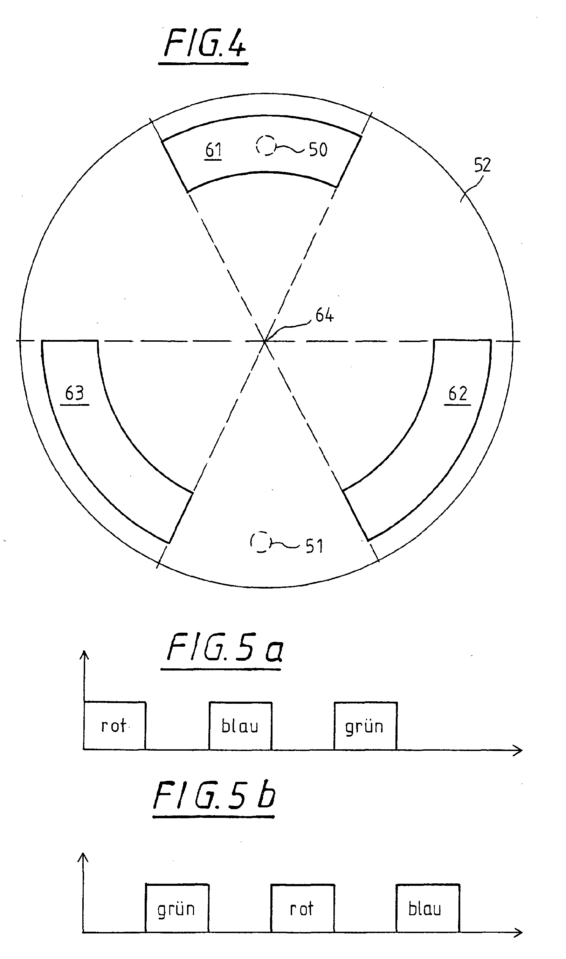

Das Darstellungssystem in Figur 3 weist für die Darstellung rechter und linker stereoskopischer Teilbilder separate Lichtquellen (50, 51) auf. Beiden Lichtquellen (50, 51) folgt ein Farbfilterrad (52), das nachfolgend anhand der Figur 4 noch näher beschrieben wird, und jeweils eine Beleuchtungsoptik (53, 54). Nach Umlenkung eines der beiden Strahlengänge mit Hilfe eines Umlenkspiegels (55) werden beide Beleuchtungsstrahlengänge mit Hilfe eines Polarisationsstrahlteilers (56) einander koaxial überlagert und mit Hilfe eines Umlenkspiegels (57) zu einem reflektiven Display (58), beispielsweise einem DMD, umgelenkt. Die auf dem DMD (58) dargestellten stereoskopischen Teilbilder werden mit Hilfe einer Projektionsoptik (60) auf eine die Polarisation erhaltende Leinwand projiziert. Die Beobachtung der stereoskopischen Teilbilder erfolgt hier mit einer Polarisationsbrille (62), die für das linke und rechte Auge jeweils ein Polarisationsfilter mit zueinander senkrechten Durchlaßrichtungen aufweist.

Die Ansteuerung des Displays (58) erfolgt wiederum über eine Steuereinrichtung (59), die gleichzeitig auch zur Ansteuerung des Antriebsmotors (60) für das Farbfilterrad (52) dient.

Das Farbfilterrad (52) weist über den Umfang verteilt drei Filterbereiche (61, 62, 63) auf, die sich jeweils über einen Winkelbereich von 60° erstrecken und jeweils voneinander durch nicht durchlässige Bereiche, die sich ebenfalls über einen Winkelbereich von 60° erstrecken getrennt sind. Einer der Filterbereich (61) weist dabei ein rotdurchlässiges Glas, ein Filterbereich (62) ein gründurchlässiges Glas und der dritte Filterbereich (63) ein blauchdurchlässiges Glas auf. Die sich mit diesem Filterrad (52) ergebende Farblichtsequenz im Beleuchtungsstrahlengang der Lampe (50) ist in der Figur 5a und im Beleuchtungsstrahlengang der Lampe (51) in Figur 5b dargestellt. Dabei ist vorausgesetzt, daß die beiden Lampen (50, 51) bezüglich der Rotationsachse (64) des Filterrades (52) um 180° zueinander angeordnet sind, was in der Figur 4 durch die gestrichelt angedeuteten Lampenpositionen angedeutet ist. Ein wesentlicher Vorteil dieser Beleuchtungsanordnung ist, daß für die Bildtrennung zwischen rechtem und linken Stereoteilbild kein weiterer Polarisationsschalter im Beleuchtungsstrahlengang oder im Beobachtungsstrahlengang erforderlich ist. Die Aufgabe des Polarisationsschalters wird vielmehr durch das Filterrad in Verbindung mit dem Polarisationsstrahlteiler (56) erreicht.

Bei diesem Ausführungsbeispiel wird für die Polarisationstrennung das Filterrad (52) bildsynchron mit der Darstellung rechter und linker Teilbilder, genauer gesagt des jeweiligen Farbanteiles des linken und rechten Teilbildes geschaltet, indem das Filterrad (52) zwischen zwei Farbteilbildern jeweils um 60° weitergedreht wird.

Die Beleuchtungseinrichtung mit zwei Lichtquellen (50, 51) entsprechend der Figur 3 ist natürlich nicht nur für große Projektionsdisplays anwendbar, sondern liefert die selben Vorteile auch bei miniaturisierten Displays, beispielsweise indem das Projektionsobjektiv (60) und die Leinwand (61) durch einen Beobachtungstubus entsprechend dem Ausführungsbeispiel nach Figur 1 mit einer Abbildungsoptik (8) und einem Polarisationsstrahlteiler (9), der den gemeinsamen Beobachtungsstrahlengang in zwei Teilstrahlengänge aufteilt, eingesetzt wird.

Anstelle von zwei Lichtquellen (50, 51) und einem den Lichtquellen nachgeschalteten Farbfilterrad (52) ist es für miniaturisierte stereoskopische Darstellungssysteme auch denkbar, für jeden der beiden Beleuchtungsstrahlengänge jeweils eine rote, blaue und grüne LED vorzusehen, deren Licht über einen Polarisationsstrahlteiler (56) einander überlagert wird und die von der Videosteuerung (59) bildsynchron mit der Darstellung der stereoskopischen Farbteilbilder jeweils getrennt, entsprechend der in den Figuren 5a und 5b dargestellten Sequenzen angesteuert werden. Ein derartiges stereoskopisches Darstellungssystem kommt ohne jegliche mechanisch bewegte Teile und ohne schnelle Polarisationsschalter aus.

## Patentansprüche

1. Stereoskopisches Darstellungssystem mit einem einzigen Display (7, 31), auf dem zeitlich sequentiell rechte und linke Teilbilder darstellbar sind, zwei separaten Teilstrahlengängen (21, 22) für eine Beobachtung nur linker und nur rechter Teilbilder und einer Umschalteinrichtung (5, 9, 35, 38) die bildsynchron mit der Darstellung rechter und linker Teilbilder auf dem Display (7, 31) die auf dem Display (7, 31) dargestellten Informationen aus einem gemeinsamen Teil des Beobachtungsstrahlenganges alternierend jeweils separat in einen der zwei separaten Teilstrahlengänge (21, 22) einkoppelt.

2. Stereoskopisches Darstellungssystem nach Anspruch 1, wobei die Umschalteinrichtung einen in den Strahlengang ein- und ausschaltbaren Spiegel aufweist.

3. Stereoskopisches Darstellungssystem nach Anspruch 1, wobei die Umschalteinrichtung (5, 9; 35, 38) einen Polarisationsschalter (5, 35) im Beleuchtungsstrahlengang oder im gemeinsamen Teil des Beobachtungsstrahlenganges aufweist.

4. Stereoskopisches Darstellungssystem nach Anspruch 3, wobei ein teildurchlässiger Spiegel vorgesehen ist und wobei in den separaten Teilstrahlengängen Polarisationsfilter mit zueinander gekreuzten Durchlaßrichtungen angeordnet sind.

5. Stereoskopisches Darstellungssystem nach Anspruch 3, wobei ein Polarisationsstrahlteiler (9, 38) vorgesehen ist.

6. Stereoskopisches Darstellungssystem nach Anspruch 5, wobei der Polarisationsschalter (35) im gemeinsamen Teil des Beobachtungsstrahlenganges angeordnet ist.

7. Stereoskopisches Darstellungssystem nach einem der Ansprüche 1 - 6, wobei einer der beiden separaten Teilstrahlengänge (22) eine Transferoptik (14, 15; 39, 40) aufweist.

8. An einem Kopf tragbares Beobachtungssystem mit einem stereoskopischen Darstellungssystem nach einem der Ansprüche 1 - 7.

9. Beobachtungssystem nach Anspruch 8, wobei zwischen dem Display (31) und dem Strahlteiler (38) ein Umlenkspiegel (36) angeordnet ist.

10. Stereoskopisches Darstellungssystem mit einem einzigen Display (58), auf dem zeitlich sequentiell rechte und linke Teilbilder darstellbar sind, einem Beleuchtungsstrahlengang (50 - 57) durch den das Display (58) zeitlich sequentiell mit Licht unterschiedlicher Polarisationsrichtungen beleuchtbar ist, wobei der Beleuchtungsstrahlengang einen Polarisationsstrahlteiler (56) aufweist.

11. Stereoskopisches Darstellungssystem nach Anspruch 10, wobei zwei Lichtquellen (50, 51) vorgesehen sind, und das von den beiden Lichtquellen (50, 51) emittierte Licht durch den Polarisationsstrahlteiler (56) einander koaxial überlagerbar ist.

12. Stereoskopisches Darstellungssystem nach Anspruch 11, wobei hinter den beiden Lichtquellen (50, 51) ein gemeinsames Farbfilterrad (52) angeordnet ist.

13. Stereoskopisches Darstellungssystem nach Anspruch 12, wobei das Farbfilterrad bildsynchron mit der Darstellung stereoskopischer Farbsequenzen angesteuert ist.
